# EUROPEAN PATENT SPECIFICATION

(11) **EP 3 231 922 B1**
(45) Date of publication and mention of the grant of the patent: **24.08.2022**
(21) Application number: 15867349.1
(22) Date of filing: 31.08.2015
(51) Int. Cl.: D06F 29/00, D06F 33/46, D06F 25/00, D06F 39/04, D06F 58/26, D06F 58/48, D06F 101/14, D06F 103/38, D06F 105/28, D06F 103/68

(54) **CONTROL METHOD FOR DUAL-TUB WASHING MACHINE**
STEUERUNGSVERFAHREN FÜR WASCHMASCHINE MIT ZWEI WANNEN
PROCÉDÉ DE COMMANDE D'UNE MACHINE À LAVER À DEUX CUVES

(30) Priority: 12.12.2014 CN 201410767349
(43) Date of publication of application: 18.10.2017
(73) Proprietor: Qingdao Haier Drum Washing Machine Co., Ltd., Shandong 266101 (CN)
(72) Inventor: LV, Peishi, Qingdao Shandong 266101 (CN); LI, Wenwei, Qingdao Shandong 266101 (CN); WANG, Jinkai, Qingdao Shandong 266101 (CN); WU, Jun, Qingdao Shandong 266101 (CN); NING, Xiao, Qingdao Shandong 266101 (CN)
(74) Representative: Beck & Rössig European Patent Attorneys
(86) International application number: PCT/CN2015/088589
(87) International publication number: WO 2016/090967

(56) References cited:
- CN-A- 101 113 557
- CN-A- 102 061 590
- CN-A- 102 203 337
- JP-A- H0 321 295
- JP-A- S63 127 788
- KR-A- 20110 083 235
- US-A- 4 663 948
- US-A1- 2008 022 465
- US-A1- 2011 041 258
- US-A1- 2012 047 661

## Description

### TECHNICAL FIELD

The present disclosure relates to the technical field of washing machines, and particularly relates to a control method of a dual-drum washing machine.

### BACKGROUND ART

At present, drum washing machines available in the market have only one washing drum. As the quality of life improves, people are gradually more concerned about hygiene of themselves. Especially for washing clothes at home, more and more people wash their clothes separately. For example, underwear and outer garments, infants' clothes and adults' clothes, and garments of different colors are washed separately, or a small amount of clothes are washed timely. Using an existing washing machine to achieve the above purposes, not only is a large amount of energy and water wasted, but also a user's hygiene requirement is hard to meet. If two or more washing machines are purchased to meet the needs, it increases the cost and can also bring the trouble of large space occupation.

Therefore, using a dual-drum washing machine can meet the above needs, sufficiently control the cost, and solve the problems of energy, water and space waste. A reasonable dueldrum design has an arrangement of an upper drum and a lower drum to save space, but power consumption control of the overall machine is required accordingly. Especially when heating, drying and high-speed dewatering are performed at the same time, overload may occur to seriously influence the using stability and service life of the machine.

CN 102203337 A discloses in a method control logic of heating during the use of a dual-drum washing machine: two drums operate alternately or sequentially, and when commands are received at the same time, the priority of the two washing drums is determined by the remaining washing time.

However, in the control method of the above patent, it only discloses a sequential heating control method alone or an alternate heating control method alone, but the two methods may be combined during actual use, which is not disclosed in CN 102203337 A. Moreover, the control of the two drums seems complex, and the power control is not all-round.

A control method of a dual-drum washing machine of the type having a first washing drum, a second washing drum and a control system is known from US2012/0047661 A1. The method includes determining which of two heaters of the washing machine to be operated first in consideration of pre-set operating conditions and subsequently carrying out a predefined heating regime.

Further dual machines are known from JP S63 127788 A, KR 2011 0083235 A, US 2008/022465 A1, US 2011/041258 A1, and JP H03 21295 A.

### SUMMARY OF THE INVENTION

To solve the above problems, the present disclosure provides a control method of a dual-drum washing machine, whereby a control method combining sequential heating and alternate heating is achieved, and power control is more all-round.

Specifically, the control method of the dual-drum washing machine of the present disclosure adopts the technical solution as defined by claim 1.

Further, a total heating time of the second washing drum may be *T*_{*m*2}, and 0<*T*₀≤1/3*T*_{*m*2}.

Further, 0 < *T*₀ ≤5min.

Further, in the alternate heating procedure in step S4, the first washing drum and the second washing drum may successively heat for a certain time interval; after the end of heating for each time interval, whether heating of the first washing drum and the second washing drum ends is determined. If heating of the first washing drum or the second washing drum ends, the second washing drum or the first washing drum keeps heating until the end; and otherwise, alternate heating is continued.

Further, in the alternate heating procedure of step S4:
after the time interval of heating of the first washing drum reaches *T*₁ , it may be determined whether the temperature of the first washing drum is equal to a preset temperature. If the determination result is yes, heating of the first washing drum ends, and the second washing drum heats up to the preset temperature; and if the determination result is no, heating of the first washing drum pauses, and the second washing drum heats.

After the time interval of heating of the second washing drum reaches *T*₂, it may be determined whether the temperature of the second washing drum is equal to the preset temperature. If the determination result is yes, heating of the second washing drum ends, and the first washing drum heats up to the preset temperature; and if the determination result is no, heating of the second washing drum pauses, and the first washing drum heats.

Further, *T*₁ and *T*₂ are minimum time intervals for each heating time of the first washing drum and the second washing drum, respectively, and preferably, *T*₁ = *T*₂.

Further, in the sequential heating procedure of step S4, the first washing drum may wait until the end of the heating of the second washing drum, and then to heat, and the second washing drum executes the following determination during the heating:
whether the temperature of the second washing drum is equal to a preset temperature is determined. If the determination result is yes, heating of the second washing drum ends; and if the determination result is no, heating of the second washing drum does not end.

Further, the first washing drum may execute the following determination during the heating:
whether the temperature of the first washing drum is equal to the preset temperature is determined. If the determination result is yes, heating of the first washing drum ends, and heating stage ends; and if the determination result is no, heating of the first washing drum does not end.

Further, if the determination result is no in step S3, the following determination may be executed:
whether the second washing drum is performing any of dewatering or drying procedure is determined. If the determination result is yes, the first washing drum waits until the corresponding dewatering or drying procedure of the second washing drum is finished, and then to heat; and if the determination result is no, the first washing drum heats.

Further, the first washing drum may be independently provided with a first heating device for heating the first washing drum, and the second washing drum may be independently provided with a second heating device for heating the second washing drum. And the first washing drum and the second washing drum may be provided therein with a first sensor and a second sensor for monitoring the temperature of washing water, respectively.

In the control method of the present disclosure, heating control of the dual-drum washing machine is implemented in such a manner that sequential heating and alternate heating are combined. And the corresponding heating procedure is selected by determining whether heating of the drum in the present heating procedure is coming to an end. Therefore, the corresponding heating procedure is selected according to actual condition of use in the control method of the present disclosure, so that the heating efficiency is higher, and the power control is more accurate.

In addition, the high power procedures of dewatering and drying can both be considered in the control method of the present disclosure, so that the power control is more all-round, which even highlights the technical importance of "high power procedures not running at the same time", and ensures the stability and service life of the dual-drum washing machine.

### BRIEF DESCRIPTION OF THE DRAWINGS

Fig. 1 is a flow block diagram of the present disclosure;
Fig. 2 is a schematic structural diagram of a dual-drum washing machine of the present disclosure;
Fig. 3 is a flow block diagram of a second embodiment of the present disclosure;
Fig. 4 is a flow block diagram of a third embodiment of the present disclosure;
Fig.5 is a flow block diagram of a fourth embodiment of the present disclosure; and
Fig. 6 is a flow block diagram of a fifth embodiment of the present disclosure.
Reference signs in the drawings: 1- first washing drum; 2- second washing drum.

### DETAILED DESCRIPTION OF THE EMBODIMENTS

A control method of a dual-drum washing machine of the present disclosure is described below in detail in conjunction with the accompanying drawings.

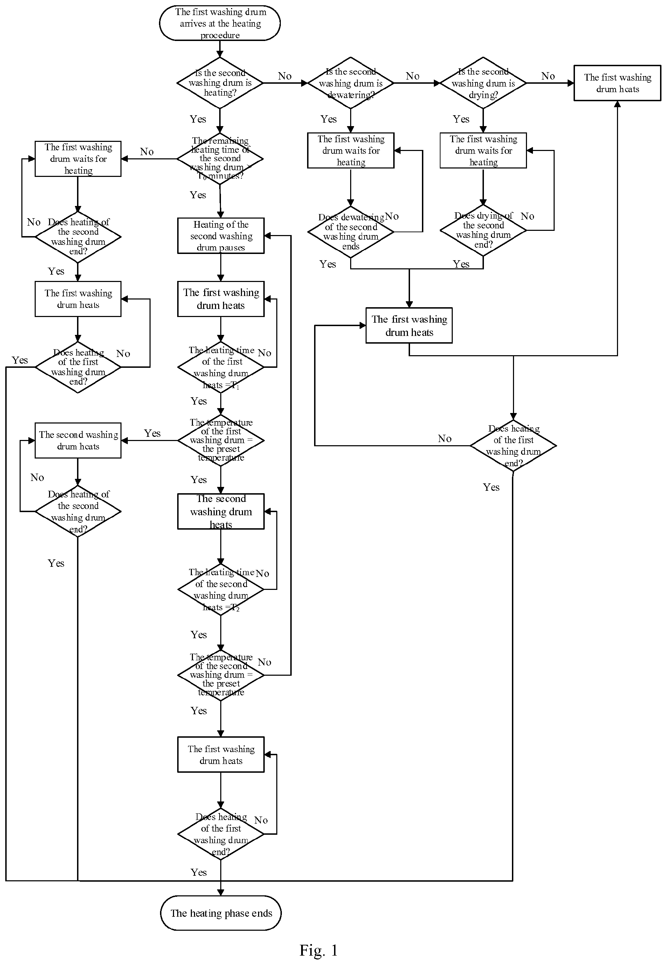

As shown in Fig. 1, the control method of a dual-drum washing machine of the present disclosure comprises the following steps:
step S1: before a first washing drum performing heating;
step S2: determining whether a second washing drum is heating;
step S3: if the determination result is yes, determining whether the remaining heating time of the second washing drum is more than *T*₀; and
step S4: if the determination result is yes, performing an alternate heating procedure in which the first washing drum and the second washing drum heat alternately, and if the determination result is no, performing a sequential heating procedure in which the second washing drum heats before the first washing drum,
wherein *T*₀ is a time value, set through a system, for determining whether heating of the second washing drum is coming to an end.

In the present disclosure, before heating of the first washing drum, whether the second washing drum is heating is determined. And if the second washing drum is heating, the first washing drum waits for its turn to heat or the first washing drum and the second washing drum alternately heat according to the principle of "high power procedures not running at the same time" (i.e. the two drums do not carry out high power operations at the same time, so as to reduce the instant power of the dual-drum washing machine and ensure the stability of the dual-drum washing machine).

As for when to select the sequential heating procedure in which the second drum heats before the first drum heat, and when to select the alternate heating procedure in which the first drum and the second drum heat alternately, it mainly depends on determination of whether the heating time of the second drum is going to be over. If heating of the second drum is coming to an end, the sequential heating procedure in which the first drum waits until the second drum finishes heating is selected, and then to heat; and if the remaining heating time of the second drum is still long, the procedure in which heating of the second drum pauses and the first drum and the second drum heat successively and alternately for some time is adopted.

The advantages of adopting such selection determination in the present disclosure are as follows: firstly, if the second drum is going to finish heating, the first drum selects to wait, which is more conformable to the actual condition and avoids frequent control and switch between the drums, thus increasing the heating efficiency. Secondly, if there is still some heating time for the second drum, alternate heating of the two drums is selected, which can quicken heating of the first drum and prevent prolonging the washing waiting time of the first drum because the first drum waits for too long time, so that washing procedures of the two drums can be carried out simultaneously, thus improving a user's experience of use. And finally, regardless of the heating procedure, only one drum carries out heating at a time, which conforms to the basic principle of "high power procedures not running at the same time".

A key point in the present disclosure is how to determine whether heating of the second drum is coming to an end, specifically by determining whether the heating time of the second drum is about to reach a preset value or by determining whether the heating temperature of the second drum is about to reach a preset value. As a preferred embodiment of the present disclosure, due to the fact that at present, the heating procedure is generally set by heating time, determination is made in the present disclosure by determining whether the heating time of the second drum is going to be over, i.e. by determining whether the remaining heating time of the second washing drum is more than *T*₀, wherein *T*₀ is a time value, set through a system, for determining whether heating of the second washing drum is coming to an end.

The specific set value of *T*₀ should obviously be related to the whole heating time of the second drum. That is, if the whole heating time of the second washing drum is *T*_{*m*2}, then 0 < *T*₀≤1/3 *T*_{*m*2}*.* Preferably the set value of *T*₀ should be as small as possible.

A general empirical value of *T*₀ can be determined based on the whole washing period and heating time of the washing machine, and preferably, 0< *T*₀ ≤5min.

In the alternate heating procedure of step S4 in the present disclosure, the first washing drum and the second washing drum successively heat for certain time intervals. After the end of heating for each time interval, whether heating of the first washing drum and the second washing drum ends is determined. If heating of the first washing drum or the second washing drum ends, the second washing drum or the first washing drum keeps heating until the end; and otherwise, alternate heating is continued.

In the alternate heating procedure of the present disclosure, determination is made after the end of each time interval of heating, and timely adjustment is made based on the determination result. If heating of one drum ends, heating of the other drum can be carried out more rapidly, thus improving the heating efficiency.

In the alternate heating procedure of step S4 in the present disclosure:
after the time interval of heating of the first washing drum reaches *T*₁ , whether the temperature of the first washing drum is equal to a preset temperature is determined. If the determination result is yes, heating of the first washing drum ends, and the second washing drum heats up to the preset temperature; and if the determination result is no, heating of the first washing drum pauses, and the second washing drum heats.

After the time interval of heating of the second washing drum reaches *T*₂, whether the temperature of the second washing drum is equal to the preset temperature is determined. If the determination result is yes, heating of the second washing drum ends, and the first washing drum heats up to the preset temperature; and if the determination result is no, heating of the second washing drum pauses, and the first washing drum heats;

Specifically, the alternate heating procedure of step S4 includes the following steps:
step S411: the second washing drum pausing heating;
step S412: the first washing drum starting heating;
step S413: determining whether the heating time of the first washing drum is equal to *T*₁ ;
step S414: if the determination result is yes, proceeding to the next step; and if the determination result is no, returning to step S412;
step S415: determining whether the temperature of the first washing drum is equal to a preset temperature;
step S416: if the determination result is yes, the second washing drum heating up to the preset temperature and then the heating phase ending; and if the determination result is no, proceeding to the next step;
step S417: the second washing drum heating;
step S418: determining whether the heating time of the second washing drum is equal to *T*₂ ;
step S419: if the determination result is yes, proceeding to the next step; and if the determination result is no, returning to step S417;
step S4110: determining whether the temperature of the second washing drum is equal to the preset temperature; and
step S4111: if the determination result is yes, the first washing drum heating up to the preset temperature and then the heating phase ending; and if the determination result is no, returning to step S411.

When the first drum and the second drum heat alternately in the present disclosure, the heating time of the first drum at a time is *T*₁, and the heating time of the second drum at a time is *T*₂*. T*₁ and *T*₂ are set in relation to the whole heating time *T*_{1*m*} of the first drum and the whole heating time *T*_{*m*2} of the second drum, where 0< *T*₁ ≤1/2*T*_{1*m*}, and 0< *T*₂ ≤1/2 *T*_{*m*2}; and preferably, 0< *T*₁ ≤1/4 *T*_{1*m*}, and 0<*T*₂≤1/4*T*_{*m*2}.

Furthermore, set values of *T*₁ and *T*₂ may be or may be not equal, and if the difference between their whole heating time *T*_{1*m*} and *T*_{*m*2} is relatively large, the set values of *T*₁ and *T*₂ are preferably different, which can be more favorable for them to perform heating alternately and finish heating at the same time.

As a preferred embodiment of the present disclosure, since the difference of the heating time for a washing machine is generally not large, *T*₁ and *T*₂ are minimum time intervals for each heat time of the first washing drum and the second washing drum, respectively, and preferably, *T*₁ = *T*₂*.*

Further, in the sequential heating procedure of step S4 in the present disclosure, the first washing drum waits until the end of the heating of the second washing drum, and then to heat, and the second washing drum executing the following determination during heating:
whether the temperature of the second washing drum is equal to a preset temperature is determined. If the determination result is yes, heating of the second washing drum ends; and if the determination result is no, heating of the second washing drum does not end.

Specifically, the sequential heating procedure of step S4 in the present disclosure includes the following steps:
step S421: the first washing drum waiting for its turn to heat;
step S222: determining whether heating of the second washing drum ends;
step S423: if the determination result is yes, proceeding to the next step; and if the determination result is no, returning to step S421;
step S424: the first washing drum starting heating;
step S425: determining whether heating of the first washing drum ends; and
step S426: if the determination result is yes, the heating phase ending; and if the determination result is no, returning to step S424.

Further, the method for determining whether heating of the second washing drum and the first washing drum ends in steps S422 and S425 is: determining whether the second washing drum and the first washing drum reach preset heating temperature values. If the second washing drum and the first washing drum reach the preset heating temperature values, heating of the second washing drum and the first washing drum ending; and otherwise, heating not ending.

Whichever of the sequential heating procedure and the alternate heating procedure is involved in the present disclosure, heating temperature determination is made during heating to judge whether the preset temperatures are reached. So the first washing drum and the second washing drum of the dual-drum washing machine of the present disclosure should also be provided therein with a first sensor and a second sensor for monitoring temperatures.

The first drum of the present disclosure, before its heating, not only determines whether the second drum is heating, but also needs to determine whether the second drum is performing other high power procedure if the second drum is not heating, so as to further conform to the principle of "high power procedures not running at the same time".

If the determination result of step S3 in the present disclosure is no, then the following determination is performed:
whether the second washing drum is performing any of dewatering or drying procedure is determined. If the determination result is yes, the first washing drum waits until the corresponding dewatering or drying procedure of the second washing drum is finished, and then to heat; and if the determination result is no, the first washing drum heats.

Specifically, if the determination result in step S3 is no, then the following steps are executed:
step S31: determining whether the second washing drum is dewatering;
Step S32: if the determination result is yes, proceeding to the next step;
Step S33: the first washing drum waiting for its turn to heat;
step S34: determining whether dewatering of the second washing drum ends;
Step S35: if the determination result is yes, proceeding to the next step; and if the determination result is no, returning to step S33;
step S36: the first washing drum starting heating;
step S37: determining whether heating of the first washing drum ends; and
step S38: if the determination result is yes, the heating phase ending; and if the determination result is no, returning to step S36.

In the control method of the present disclosure, if it is determined that the second drum is not heating when the first drum heats, it further determines whether the second drum is dewatering. And if the second drum is dewatering, the first drum waits for its turn to heat, and does not perform the heating procedure until the second drum finishes dewatering, which prevents heating of the first drum while the second drum is dewatering to cause too high power of the washing machine and influence the heating effect or dewatering effect of the washing machine.

Further, if the determination result of step S32 is no, then the following steps are executed:
step S321: determining whether the second washing drum is drying;
step S322: if the determination result is yes, proceeding to the next step; and if the determination result is no, the first washing drum heating to the end of the heating phase;
step S323: the first washing drum waiting for its turn to heat;
step S324: determining whether drying of the second washing drum ends;
step S325: if the determination result is yes, proceeding to the next step; and if the determination result is no, returning to step S323;
step S326: the first washing drum starting heating;
step S327: determining whether heating of the first washing drum ends; and
step S328: if the determination result is yes, the heating phase ending; and if the determination result is no, returning to step S326.

The drying procedure's influence on the power is also considered in the control method of the present disclosure. If the second drum is not performing a high power procedure of heating or dewatering when the first drum heats, it further determines whether the second drum is performing a drying procedure. And if the second drum is drying, the first drum waits for its turn to heat, and does not start heating until the second drum finishes drying, which further avoids the two high power procedures of heating and drying are carried out simultaneously.

In summary, in the control method of the present disclosure, before heating of the first drum, not only whether the second drum is heating, but also whether the second drum is dewatering or drying are considered. As such, taking into full considerations the various high power factors, the control method is more all-round and ensures the stability and service life of the dual-drum washing machine.

### Embodiment 1:

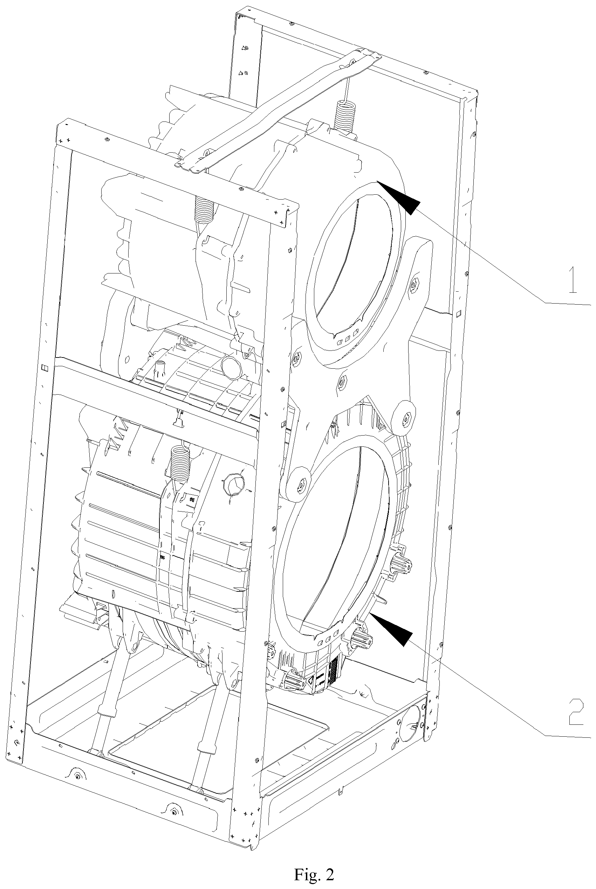

As shown in Fig. 2, a dual-drum washing machine of the embodiment is provided with a first washing drum 1 and a second washing drum 2 which can independently execute clothes washing steps. The first washing drum 1 and the second washing drum 2 can independently perform a washing procedure, a rinsing procedure and a dewatering procedure on clothes in turn, respectively, to achieve the purpose of washing the clothes.

The first washing drum 1 and the second washing drum 2 of the embodiment are also provided with a first heating device and a second heating device respectively, to achieve heating of washing water of the first washing drum 1 and the second washing drum 2 respectively and enhance the washing effect.

Further, the first washing drum 1 and the second washing drum 2 of the embodiment may also be provided with a drying device respectively, to carry out the drying procedure after the dewatering procedure, to achieve the purpose of drying the clothes in the first washing drum 1 and/or the second washing drum 2.

### Embodiment 2:

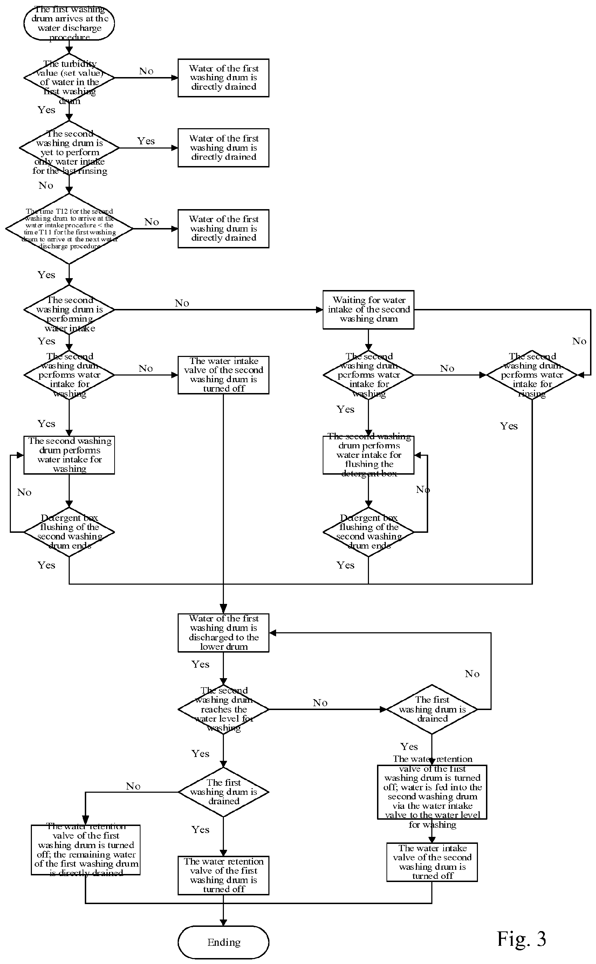

As shown in Fig. 3, waiting time for water discharge is used in the embodiment as a determination criterion for determining whether to reuse water. And based on the waiting time for water discharge, whether to wait for discharging water to the other drum for reuse when reaching a water discharge procedure is determined, which uses a simple determination and control logic, and the control stability in the actual washing procedure is relatively high. Furthermore, it achieves sufficient reuse of water, is highly applicable, and can be more effectively put into extensive applications.

When the first washing drum and the second washing drum are working at the same time, a control method of water reuse is as follows:
In a control method of water reuse of a multi-drum washing machine, the multi-drum washing machine at least includes a first washing drum and a second washing drum. In the case the first washing drum and the second washing drum are working at the same time, when the first washing drum reaches the water discharge procedure, the time T₁₂ for the second washing drum to reach a water intake procedure and the time T₁₁ for the first washing drum to reach the next water discharge procedure are compared. If T₁₂< T₁₁, the first washing drum waits for water intake of the second washing drum; and if T₁₂≥T₁₁, water of the first washing drum is directly drained.

Before the time T₁₂ for the second washing drum to reach the water intake procedure and the time T₁₁ for the first washing drum to reach the next water discharge procedure are compared, whether the water of the first washing drum can be reused is determined. If not, the water of the first washing drum is directly drained; and if yes, the time T₁₂ for the second washing drum to reach the water intake procedure and the time T₁₁ for the first washing drum to reach the next water discharge procedure are compared.

Or, when the first washing drum waits for water intake of the second washing drum, whether the water of the first washing drum can be reused is determined. If not, the water of the first washing drum is directly drained; and if yes, the water of the first washing drum is discharged into the second washing drum for water reuse.

Specifically, it includes step 1: when the first washing drum reaches the water discharge procedure, determining whether the water of the first washing drum can be reused. If yes, executing step 2; and if not, directly draining the water of the water discharge procedure;
step 2: comparing the time T₁₂ for the second washing drum to reach the water intake procedure and the time T₁₁ for the first washing drum to reach the next water discharge procedure; if T₁₂<T₁₁, the first washing drum waiting for water intake of the second washing drum, the water of the first washing drum being discharged into the second washing drum for water reuse; and if T₁₂≥T₁₁, directly draining the water of the first washing drum. The addition of the process of determining whether to wait increases the probability of water reuse of the first washing drum to a great extent, so that more water can be reused.

In step 1, if the second washing drum is performing water intake when the first washing drum reaches the water discharge procedure, the time T₁₂ for the second washing drum to reach the water intake procedure is 0 without having to wait, and the water of the first washing drum is discharged into the second washing drum for water reuse. It is also possible, before the time T₁₂ for the second washing drum to reach the water intake procedure and the time T₁₁ for the first washing drum to reach the next water discharge procedure are compared, to determine whether the second washing drum is performing the water intake procedure at that time. And if the second washing drum is not performing the water intake procedure, then the time T₁₂ for the second washing drum to reach the water intake procedure and the time T₁₁ for the first washing drum to reach the next water discharge procedure are compared.

In step 2, allowed waiting time T₁ is set, where T₁< T₁₁; if T₁₂<T₁, the first washing drum waits for water intake of the second washing drum, and discharges the water of the first washing drum into the second washing drum for water reuse; and if T₁₂≥T₁₁, the water of the first washing drum is directly drained. This step can avoid the first washing drum waits for too long time, and water reuse is reasonably adopted while ensuring the washing time of the first washing drum. It prevents wasting too much time of the first washing drum due to sole consideration of water reuse. If the washing machine determines that the waiting time is too long and exceeds the set allowed waiting time, the water of the first washing drum will not be reused. This determination makes water reuse more reasonable, and the relationship between the waiting time and water reuse are coordinated to the greatest degree.

In step 1, a turbidity value or a foam concentration value of the water in the first washing drum is detected. If the turbidity value or the foam concentration value is smaller than a set value, the water of the first washing drum can be reused; and otherwise, the water of the first washing drum cannot be reused and is directly drained. Only when the turbidity value or the foam concentration value is within a set range can the water be reused.

In step 1, when the first washing drum reaches the water discharge procedure, whether the second washing drum is performing or about to perform water intake for the last rinsing is determined. If yes, the water of the first washing drum is directly drained; and if not, whether the water of the first washing drum can be reused is further determined. It ensures clean water is fed for the last rinsing, to guarantee the effect after washing of the clothes.

In step 2, before the water of the first washing drum is discharged into the second washing drum, whether the second washing drum is performing a water intake procedure for washing is determined. If yes, the second washing drum firstly performs water intake for flushing a detergent box, and after the second washing drum finishes water intake for flushing the detergent box, the water of the first washing drum is discharged into the second washing drum. And if not, the water of the first washing drum is directly discharged into the second washing drum.

In step 2, in discharging the water of the first washing drum into the second washing drum, the water level of the second washing drum is detected. If there is still water left in the first washing drum when the water level of the second washing drum reaches a set level value, the remaining water of the first washing drum is directly drained. And if the water level of the second washing drum does not reach the set level value after the water in the first washing drum is entirely discharged into the second washing drum, clean water is fed into the second washing drum through an external water inlet.

In directly draining the water of the first washing drum, whether the second washing drum is performing the dewatering procedure at that time is determined; If yes, the first washing drum waits until the second washing drum finishes dewatering, and then to drain, and if not, the time to dewatering of the second washing drum is determined as T₃₂, and the time used for dewatering of the second washing drum is determined as T₃₃, and allowed waiting time T₃ is set. If T₃₂+T₃₃< T₃, the first washing drum waits until the second washing drum finishes dewatering, and then to drain, and otherwise the water of the first washing drum is directly drained.

Whether the water of the first washing drum is reusable may also be determined through determination on the washing condition and the number of washing time(s). In step 1, the water of the first washing drum cannot be reused, if the first washing drum performing water discharge is in a washing state and the second washing drum performing water intake is in a rinsing state; or if the first washing drum performing water discharge and the second washing drum performing water intake are both in the washing state and the number of washing time(s) of the first washing drum is less than that of the second washing drum; or if the first washing drum performing water discharge and the second washing drum performing water intake are both in the rinsing state and the number of rinsing time(s) of the first washing drum is less than that of the second washing drum,.

When the second washing drum reaches the water discharge procedure, whether the water of the second washing drum is reusable is determined; if yes, the time for the first washing drum to reach the water intake procedure and the time for the second washing drum to reach the next water discharge procedure are compared to determine whether the second washing drum waits for the first washing drum to perform the water intake procedure.

A water outlet of the first washing drum is communicated with the second washing drum, so that the water in the first washing drum can be discharged into the second washing drum for reuse. A water retention valve is provided at the water outlet of the first washing drum, and the water of the first washing drum can enter the second washing drum via the water retention valve. The second washing drum is provided with a water intake valve, and external clean water can enter the second washing drum via the water intake valve. The control method is as follows:
1) the first washing drum reaching the water discharge procedure;
2) determining whether the water in the first washing drum can be reused; if yes, executing step 3); and if not, executing step 6);
3) determining the time for the first washing drum to reach the next water discharge procedure as T₁₁, and determining the time for the second washing drum to reach the water intake procedure as T₁₂; if T₁₂< T₁₁, executing step 4); and if T₁₂> T₁₁, executing step 6);
4) the first washing drum waiting for the second washing drum to perform water intake, and executing step 5);
5) discharging the water of the first washing drum into the second washing drum; and
6) directly draining the water of the first washing drum.

In the control method, a process for determining whether the second washing drum is performing water intake may also be added before comparison between the time for the first washing drum to reach the next water discharge procedure and the time for the second washing drum to reach the water intake procedure. The control method is as follows:
1) the first washing drum reaching the water discharge procedure;
2) determining whether the water in the first washing drum can be reused; if yes, executing step 3); and if not, executing step 7);
3) determining whether the second washing drum is performing the water intake procedure at that time; if not, executing step 4); and if yes, executing step 6);
4) determining the time for the first washing drum to reach the next water discharge procedure as T₁₁, and determining the time for the second washing drum to reach the water intake procedure as T₁₂; if T₁₂< T₁₁, executing step 5); and if T₁₂> T₁₁, executing step 7);
5) the first washing drum waiting for the second washing drum to perform water intake, and executing step 6);
6) discharging the water of the first washing drum into the second washing drum; and
7) directly draining the water of the first washing drum.

The control method may also include determining whether the first washing drum has sufficient time to wait for the second washing drum to perform water intake. The control method is as follows:
1) the first washing drum reaching the water discharge procedure;
2) determining whether the water in the first washing drum can be reused; if yes, executing step 3); and if not, executing step 8);
3) determining whether the second washing drum is performing the water intake procedure at that time; if not, executing step 4); and if yes, executing step 7);
4) determining the time for the first washing drum to reach the next water discharge procedure as T₁₁, and determining the time for the second washing drum to reach the water intake procedure as T₁₂; if T₁₂< T₁₁, executing step 5); and if T₁₂> T₁₁, executing step 8);
5) setting allowed waiting time T₁; if T₁₂< T₁, executing step 6); and if T₁₂≥ T₁, executing step 8);
6) the first washing drum waiting for the second washing drum to perform water intake, and executing step 7);
7) discharging the water of the first washing drum into the second washing drum;
8) directly draining the water of the first washing drum.

The water of the first washing drum cannot be reused if it is very dirty or if the second washing drum performs water intake for the last rinsing. The control method is as follows:
1) the first washing drum reaching the water discharge procedure;
2) detecting the turbidity value or the foam concentration value of the water in the first washing drum, and determining whether the turbidity value or the foam concentration value is smaller than a set value;
   if yes, executing step 3); and if not, executing step 9);
3) determining whether the second washing drum is yet to perform only water intake for the last rinsing; if not, executing step 4); and if yes, executing step 9);
4) determining whether the second washing drum is performing the water intake procedure at that time; if not, executing step 5); and if yes, executing step 8);
5) determining the time for the first washing drum to reach the next water discharge procedure as T₁₁, and determining the time for the second washing drum to reach the water intake procedure as T₁₂; if T₁₂< T₁₁, executing step 6); and if T₁₂> T₁₁, executing step 9);
6) setting allowed waiting time T₁; if T₁₂< T₁, executing step 7); and if T₁₂≥ T₁, executing step 9);
7) the first washing drum waiting for the second washing drum to perform water intake, and executing step 8);
8) discharging the water of the first washing drum into the second washing drum;
9) directly draining the water of the first washing drum.

In discharging the water of the first washing drum into the second washing drum, if the second washing drum is performing water intake for washing, it also needs to flush the detergent box and detect the water level. The control method is as follows:
1) the first washing drum reaching the water discharge procedure;
2) detecting the turbidity value or the foam concentration value of the water in the first washing drum, and determining whether the turbidity value or the foam concentration value is smaller than a set value;
   if yes, executing step 3); and if not, executing step 12);
3) determining whether the second washing drum is yet to perform only water intake for the last rinsing; if not, executing step 4); and if yes, executing step 12);
4) determining whether the second washing drum is performing the water intake procedure at that time; if not, executing step 5); and if yes, executing step 10);
5) determining the time for the first washing drum to reach the next water discharge procedure as T₁₁, and determining the time for the second washing drum to reach the water intake procedure as T₁₂; if T₁₂< T₁₁, executing step 6); and if T₁₂> T₁₁, executing step 12);
6) setting allowed waiting time T₁; if T₁₂< T₁, executing step 7); and if T₁₂≥ T₁, executing step 12);
7) determining whether the second washing drum is performing the water intake procedure for washing; if yes, executing step 8); and if not, executing step 10);
8) the second washing drum firstly performing water intake for flushing the detergent box, and executing step 9) after the second washing drum finishes water intake for flushing the detergent box;
9) the first washing drum waiting for the second washing drum to perform water intake, and executing step 10);
10) discharging the water of the first washing drum into the second washing drum;
11) detecting the water level of the second washing drum; if there is still water left in the first washing drum when the water level of the second washing drum reaches a set level value, directly draining the remaining water; and if the water level of the second washing drum does not reach the set level value after the water in the first washing drum is entirely discharged into the second washing drum, feeding clean water into the second washing drum;
12) directly draining the water of the first washing drum.

The first washing drum and the second washing drum in the embodiment are numbered just for facilitating description and have no sequential relationship. It is also possible that the water of the second washing drum is reused; the water outlet of the second washing drum is communicated with the first washing drum, and the water in the second washing drum can be discharged into the first washing drum for reuse. A water retention valve is provided at the water outlet of the second washing drum, and the water of the second washing drum can enter the first washing drum via the water retention valve. The first washing drum is provided with a water intake valve, and external clean water can enter the first washing drum via the water intake valve; when one washing drum reaches the water discharge procedure, whether the water of the washing drum is to be discharged into the other washing drum for reuse is determined, and when the other drum reaches the water discharge procedure, water reuse of the other washing drum is not considered, to avoid an endless loop when both drums are waiting.

The specific control method is same as described above, with the only difference in the interchanged numbering of the first washing drum and the second washing drum, and will not be repeated here.

### Embodiment 3:

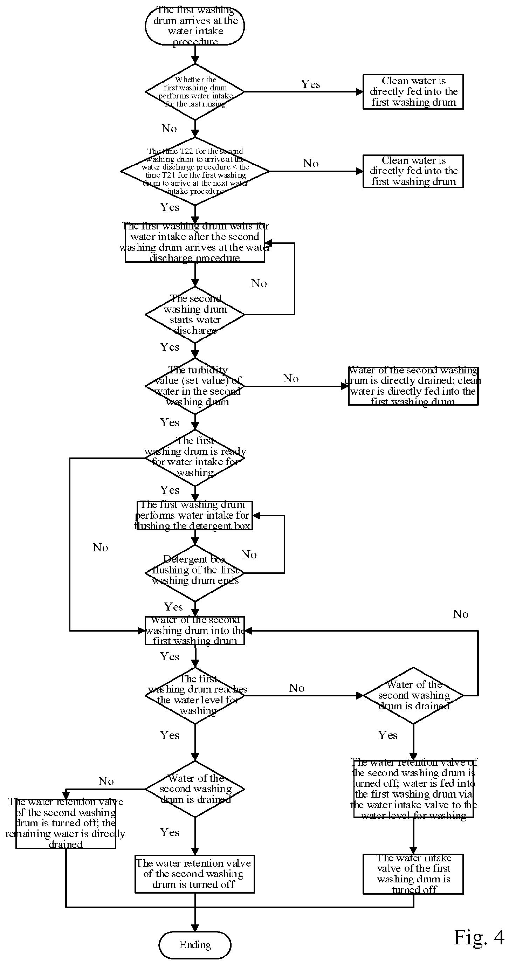

As shown in Fig. 4, waiting time for water intake is used in the embodiment as a determination criterion for determining whether to reuse water. Based on the waiting time for water intake, whether to wait for water discharge of the other drum for reuse when reaching a water intake procedure is determined, which uses a simple determination and control logic, and the control stability in the actual washing procedure is relatively high. Furthermore, it achieves sufficient reuse of water, is highly applicable, and can be more effectively put into extensive applications.

When the first washing drum and the second washing drum are working at the same time, a control method of water reuse is as follows:
In a control method of water reuse of a multi-drum washing machine is provided, and the multi-drum washing machine at least includes a first washing drum and a second washing drum. In the case the first washing drum and the second washing drum are working at the same time, the control method of water reuse is as follows: when the first washing drum reaches the water intake procedure, the time T₂₂ for the second washing drum to reach the water discharge procedure and the time T₂₁ for the first washing drum to reach the next water intake procedure are compared; if T₂₂≥T₂₁, clean water is fed into the first washing drum directly; and if T₂₂< T₂₁, the first washing drum waits for water discharge of the second washing drum.

Before the time T₂₂ for the second washing drum to reach the water discharge procedure and the time T₂₁ for the first washing drum to reach the next water intake procedure are compared, whether the water of the second washing drum can be reused is determined. If not, clean water is fed into the first washing drum directly; and if yes, the time T₂₂ for the second washing drum to reach the water discharge procedure and the time T₂₁ for the first washing drum to reach the next water intake procedure are compared; or when the first washing drum waits for water discharge of the second washing drum, whether the water of the second washing drum can be reused is determined; if not, clean water is fed into the first washing drum directly; and if yes, the water of the second washing drum is discharged into the first washing drum for reuse.

This is specifically as follows: step 1: when the first washing drum reaches the water intake procedure, comparing the time T₂₂ for the second washing drum to reach the water discharge procedure and the time T₂₁ for the first washing drum to reach the next water intake procedure are compared. If T₂₂≥T₂₁, feeding clean water into the first washing drum directly; and if T₂₂< T₂₁, the first washing drum waiting for water discharge of the second washing drum, and executing step 2; and
step 2: determining whether the water of the second washing drum can be reused; if yes, discharging the water of the second washing drum into the first washing drum for reuse; and if not, feeding clean water into the first washing drum directly. The addition of the process of determining whether to wait increases the probability of water reuse of the second washing drum to a great extent, so that more water can be reused.

In step 1, if the second washing drum is performing water discharge when the first washing drum reaches the water intake procedure, the time T₂₂ for the second washing drum to reach the water discharge procedure is 0 without having to wait, and step 2 is executed directly. It is also possible, before the time T₂₂ for the second washing drum to reach the water discharge procedure and the time T₂₁ for the first washing drum to reach the next water intake procedure are compared, to determine whether the second washing drum is performing the water discharge procedure at that time. And if the second washing drum is not performing the water discharge procedure, then the time T₂₂ for the second washing drum to reach the water discharge procedure and the time T₂₁ for the first washing drum to reach the next water intake procedure are compared.

In step 1, allowed waiting time T₂ is set, where T₂< T₂₁; if T₂₂< T₂, the first washing drum waits for water discharge of the second washing drum, to execute step 2; and if T₂₂≥ T₂, clean water is fed into the first washing drum directly. This step can avoid the first washing drum waits for too long time, and water reuse is reasonably adopted while ensuring the washing time of the first washing drum. It prevents wasting too much time of the first washing drum due to sole consideration of water reuse. If the washing machine determines that the waiting time is too long and exceeds the set allowed waiting time, the first washing drum will not reuse the water of the second washing drum. This determination makes water reuse more reasonable, and the relationship between the waiting time and water reuse are coordinated to the greatest degree.

In step 2, a turbidity value or a foam concentration value of the water in the second washing drum is detected; if the turbidity value or the foam concentration value is smaller than a set value, the water of the second washing drum can be reused; and otherwise, the water of the second washing drum cannot be reused. Only when the turbidity value or the foam concentration value is within a set range can the water be reused.

In step 1, when the first washing drum reaches the water intake procedure, whether the started water intake procedure is intended for the last rinsing is determined; if yes, clean water is fed into the first washing drum directly; and if not, the time T₂₂ for the second washing drum to reach the water discharge procedure and the time T₂₁ for the first washing drum to reach the next water intake procedure are further compared. It ensures clean water is fed for the last rinsing, to guarantee the effect after washing of the clothes.

In step 2, in discharging the water of the second washing drum into the first washing drum, whether the first washing drum is performing a water intake procedure for washing is determined. If yes, the first washing drum first performs water intake for flushing the detergent box, and after the first washing drum finishes water intake for flushing a detergent box, the water of the second washing drum is discharged into the first washing drum; and if not, the water of the second washing drum is directly discharged into the first washing drum.

In step 2, in discharging the water of the second washing drum into the first washing drum, the water level of the first washing drum is detected. If there is still water left in the second washing drum when the water level of the first washing drum reaches a set level value, the remaining water of the second washing drum is directly drained. And if the water level of the first washing drum does not reach the set level value after the water in the second washing drum is entirely discharged into the first washing drum, clean water is fed into the first washing drum.

In directly draining the water of the second washing drum, whether the first washing drum is performing the dewatering procedure at that time is determined. If yes, the second washing drum waits until the first washing drum finishes dewatering, and then to drain, and if not, the time to dewatering of the first washing drum is determined as T₄₁, and the time used for dewatering of the first washing drum is determined as T₄₄, and allowed waiting time T₄ is set; and if T₄₁+T₄₄<T₄, the second washing drum waits until the first washing drum finishes dewatering, and then to drain, and otherwise the water of the second washing drum is directly drained.

Whether the water of the second washing drum is reusable may also be determined through determination on the washing condition and the number of washing time(s). In step 2, the water of the second washing drum cannot be reused, if the second washing drum performing water discharge is in a washing state and the first washing drum performing water intake is in a rinsing state, or if the second washing drum performing water discharge and the first washing drum performing water intake are both in the washing state and the number of washing time(s) of the second washing drum is less than that of the first washing drum, or if the second washing drum performing water discharge and the first washing drum performing water intake are both in the rinsing state and the number of rinsing time(s) of the second washing drum is less than that of the first washing drum.

When the second washing drum reaches the water intake procedure, the time for the first washing drum to reach the water discharge procedure and the time for the second washing drum to reach the next water intake procedure are compared to determine whether the second washing drum waits for water discharge of the first washing drum.

A water outlet of the second washing drum is communicated with the first washing drum, so that the water in the second washing drum can be discharged into the first washing drum for reuse. A water retention valve is provided at the water outlet of the second washing drum, and the water of the second washing drum can enter the first washing drum via the water retention valve. The first washing drum is provided with a water intake valve, and external clean water can enter the first washing drum via the water intake valve. The control method is as follows:
1) the first washing drum reaching the water intake procedure;
2) determining whether the water in the second washing drum can be reused; if yes, executing step 3); and if not, executing step 6);
3) determining the time for the first washing drum to reach the next water intake procedure as T₂₁, and determining the time for the second washing drum to reach the water discharge procedure as T₂₂; if T₂₂< T₂₁, executing step 4); and if T₂₂≥ T₂₁, executing step 6);
4) the first washing drum waiting for the second washing drum to perform water discharge, and executing step 5);
5) discharging the water of the second washing drum into the first washing drum;
6) directly feeding clean water into the first washing drum, and directly draining the water of the second washing drum.

In the control method, a process for determining whether the second washing drum is performing water discharge may also be added before comparison between the time T₂₂ for the second washing drum to reach the water discharge procedure and the time T₂₁ for the first washing drum to reach the next water intake procedure. The control method is as follows:
1) the first washing drum reaching the water intake procedure;
2) determining whether the water in the second washing drum can be reused; if yes, executing step 3); and if not, executing step 7);
3) determining whether the second washing drum is performing the water discharge procedure at that time; if not, executing step 4); and if yes, executing step 6);
4) determining the time for the first washing drum to reach the next water intake procedure as T₂₁, and determining the time for the second washing drum to reach the water discharge procedure as T₂₂; if T₂₂< T₂₁, executing step 5); and if T₂₂≥ T₂₁, executing step 7);
5) the first washing drum waiting for the second washing drum to perform water discharge, and executing step 6);
6) discharging the water of the second washing drum into the first washing drum; and
7) directly feeding clean water into the first washing drum, and directly draining the water of the second washing drum.

The control method may also include determining whether the first washing drum has sufficient time to wait for the second washing drum to perform water discharge. The control method is as follows:
1) the first washing drum reaching the water intake procedure;
2) determining whether the water in the second washing drum can be reused; if yes, executing step 3); and if not, executing step 8);
3) determining whether the second washing drum is performing the water discharge procedure at that time; if not, executing step 4); and if yes, executing step 7);
4) determining the time for the first washing drum to reach the next water intake procedure as T₂₁, and determining the time for the second washing drum to reach the water discharge procedure as T₂₂; if T₂₂< T₂₁, executing step 5); and if T₂₂≥ T₂₁, executing step 8);
5) setting allowed waiting time T₂; if T₂₂< T₂, executing step 6); and if T₂₂≥ T₂, executing step 8);
6) the first washing drum waiting for the second washing drum to perform water discharge, and executing step 7);
7) discharging the water of the second washing drum into the first washing drum;
8) directly feeding clean water into the first washing drum, and directly draining the water of the second washing drum.

The water of the second washing drum cannot be reused if it is very dirty or if the first washing drum performs water intake for the last rinsing. The control method is as follows:
1) the first washing drum reaching the water intake procedure;
2) determining whether the first washing drum is yet to perform only water intake for the last rinsing; if not, executing step 3); and if yes, executing step 9);
3) determining whether the second washing drum is performing the water discharge procedure at that time; if not, executing step 4); and if yes, executing step 7);
4) determining the time for the first washing drum to reach the next water intake procedure as T₂₁, and determining the time for the second washing drum to reach the water discharge procedure as T₂₂; if T₂₂< T₂₁, executing step 5); and if T₂₂≥ T₂₁, executing step 9);
5) setting allowed waiting time T₂; if T₂₂< T₂, executing step 6); and if T₂₂≥ T₂, executing step 9);
6) the first washing drum waiting for the second washing drum to perform water discharge, and executing step 7);
7) detecting the turbidity value or the foam concentration value of the water in the second washing drum, and determining whether the turbidity value or the foam concentration value is smaller than a set value;
   if yes, executing step 8); and if not, executing step 9);
8) discharging the water of the second washing drum into the first washing drum;
9) directly feeding clean water into the first washing drum, and directly draining the water of the second washing drum.

In discharging the water of the second washing drum into the first washing drum, if the first washing drum is performing water intake for washing, it also needs to flush the detergent box and detect the water level. The control method is as follows:
1) the first washing drum reaching the water intake procedure;
2) determining whether the first washing drum is yet to perform only water intake for the last rinsing; if not, executing step 3); and if yes, executing step 12);
3) determining whether the second washing drum is performing the water discharge procedure at that time; if not, executing step 4); and if yes, executing step 7);
4) determining the time for the first washing drum to reach the next water intake procedure as T₂₁, and determining the time for the second washing drum to reach the water discharge procedure as T₂₂; if T₂₂< T₂₁, executing step 5); and if T₂₂≥ T₂₁, executing step 12);
5) setting allowed waiting time T₂; if T₂₂< T₂, executing step 6); and if T₂₂≥ T₂, executing step 12);
6) the first washing drum waiting for the second washing drum to perform water discharge, and executing step 7);
7) detecting the turbidity value or the foam concentration value of the water in the second washing drum, and determining whether the turbidity value or the foam concentration value is smaller than a set value;
   if yes, executing step 8); and if not, executing step 12);
8) determining whether the first washing drum is performing the water intake procedure for washing; if yes, executing step 9); and if not, executing step 10);
9) the first washing drum first performing water intake for flushing the detergent box, and executing step 10) after the first washing drum finishes water intake for flushing the detergent box;
10) discharging the water of the second washing drum into the first washing drum;
11) detecting the water level of the first washing drum; if there is still water left in the second washing drum when the water level of the first washing drum reaches a set level value, directly draining the remaining water; and if the water level of the first washing drum does not reach the set level value after the water in the second washing drum is entirely discharged into the first washing drum, feeding clean water into the second washing drum via an external water inlet;
12) directly feeding clean water into the first washing drum, and directly draining the water of the second washing drum.

The first washing drum and the second washing drum in the embodiment are numbered just for facilitating description and have no sequential relationship. It is also possible that the water of the first washing drum is reused; the water inlet of the second washing drum is communicated with the water outlet of the first washing drum, and the water in the first washing drum can be discharged into the second washing drum for reuse. A water retention valve is provided at the water outlet of the first washing drum, and the water of the first washing drum can enter the second washing drum via the water retention valve. The second washing drum is provided with a water intake valve, and external clean water can enter the second washing drum via the water intake valve; when one washing drum reaches the water intake procedure, whether the water of the other washing drum is to be discharged into the washing drum for reuse is determined, and when the other drum reaches the water intake procedure, water reuse of the washing drum is not considered, to avoid an endless loop when both drums are waiting.

The specific control method is same as described above, with the only difference in the interchanged numbering of the first washing drum and the second washing drum, and will not be repeated here.

### Embodiment 4:

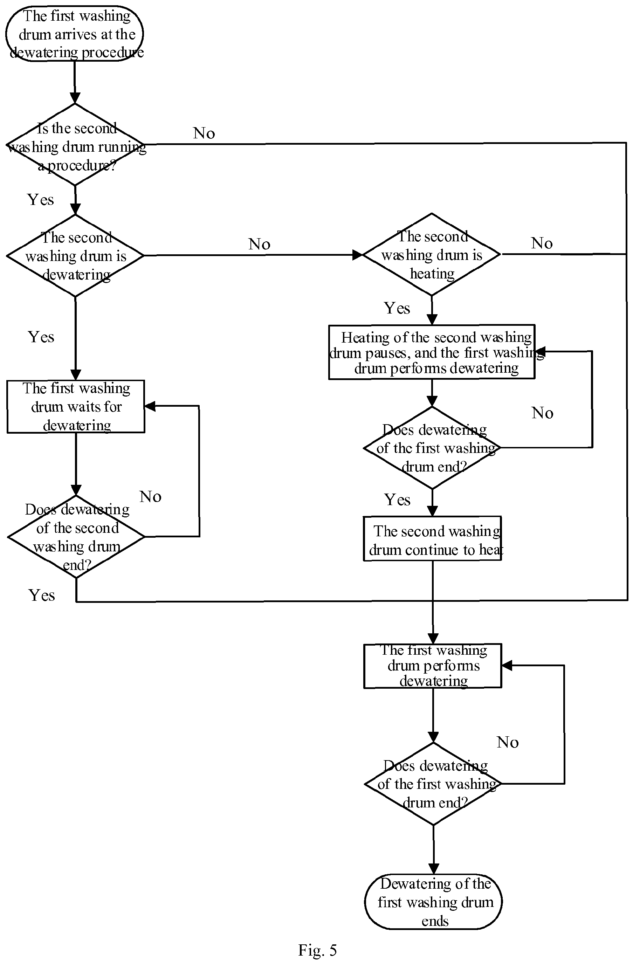

As shown in Fig. 5, the embodiment is a dewatering control procedure of a control method of a dual-drum washing machine of the present disclosure, mainly for achieving controlling of the dewatering procedure, and specifically including the following steps:
1) before the first washing drum performs dewatering;
2) determining whether the second washing drum is running a procedure;
3) if the determination result is yes, executing step 4), and if the determination result is no, the first washing drum performing dewatering;
4) determining whether the second washing drum is dewatering;
5) if the determination result is yes, executing step 6), and if the determination result is no, executing step 7);
6) the first washing drum waiting until the second washing drum finishes dewatering, then dewatering;
7) determining whether the second washing drum is heating;
8) if the determination result is yes, executing step 9), and if the determination result is no, the first washing drum performing dewatering;
9) the second washing drum pausing heating, and the first washing drum performing dewatering;
10) determining whether dewatering of the first washing drum ends;
11) if the determination result is yes, the second washing drum finishing heating, and if the determination result is no, executing step 9).

The high power procedure control system of the embodiment achieves controlling of the dewatering procedure. As the dewatering procedure of the washing machine takes shorter time than any other procedures, the embodiment follows the principle of dewatering procedure precedence: when the first washing drum is to about perform the dewatering procedure, if the second washing drum is performing the dewatering procedure, the first washing drum dewaters after the second washing drum finishes dewatering. And if the second washing drum is performing high power procedure such as heating procedure or drying procedure, other high power procedure, such as the heating or drying procedure being performed by the second washing drum is paused, and then the second washing drum continues performing other high power procedure such as the heating or drying procedure after the first washing drum preferentially performs the dewatering procedure.

Thus, the dewatering control procedure of the embodiment has the following beneficial effects:
1) It avoids the two or more drums perform the dewatering procedure simultaneously to cause larger resonance, produce greater noise and seriously influence the user's experience of use, the larger resonance also leading to some damage to the washing machine.
2) It can avoid multiple drums perform high power procedures simultaneously, prevents loss caused by a very high power of the washing machine, and ensures the stability and service life of the washing machine.

### Embodiment 5:

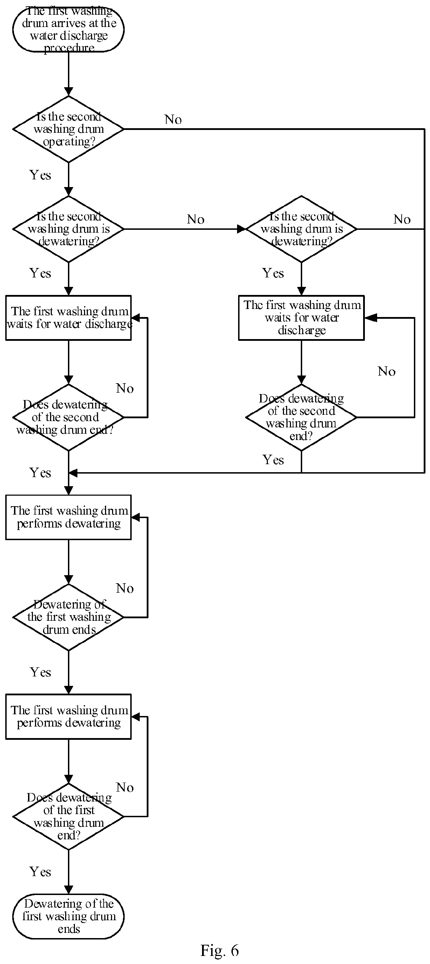

As shown in Fig. 6, the embodiment is a water discharge control procedure of a control method of a dual-drum washing machine of the present disclosure, specifically including the following steps:
1) before the first washing drum performs water discharge;
2) determining whether the second washing drum is running a procedure;
3) if the determination result is yes, executing step 4), and if the determination result is no, the first washing drum performing water discharge;
4) determining whether the second washing drum is discharging water;
5) if the determination result is yes, the first washing drum waiting until the second washing drum finishes water discharge, and then to discharge, and if the determination result is no, the first washing drum performing water discharge;

The water discharge control procedure of the embodiment achieves control of the water discharge procedure, adopts sequential control logic, and is simple to implement an easy to control. Only one drum discharges water at any moment, which ensures the reliability of water discharge without causing the problem of water pollution between the two drums. Moreover, vibration caused by dewatering is detected, and the gravity center of the overall structure is lowered with the weight of the clothes and washing water in the drums, to achieve the effect of vibration and noise reduction.

## Claims

1. A control method of a dual-drum washing machine of the type having a first washing drum (1), a second washing drum (2) and a control system, comprising following steps:
step S1: when the dual-drum washing machine has started operating and the first washing drum (1) arrives at a heating procedure before heating;
step S2: determining whether a second washing drum (2) is being heated;
step S3: if the determination result in step S2 is yes, determining whether a remaining heating time of the second washing drum (2) is more than *T*₀;
step S4: if the determination result in step S3 is yes, performing an alternate heating procedure in which the first washing drum and the second washing drum are heated alternately, and if the determination result in step S3 is no, performing a sequential heating procedure in which the second washing drum (2) is heated before the first washing drum (1)is heated,
wherein *T*₀ is a time value, set through said control system, for determining whether heating of the second washing drum (2) is coming to an end.

2. The control method of a dual-drum washing machine according to claim 1, wherein a total heating time of the second washing drum (2) is *T*_{*m*2}, and 0< *T*₀≤1/3 *T*_{*m*2}.

3. The control method of a dual-drum washing machine according to claim 1 or 2, wherein 0<*T*₀≤5min.

4. The control method of a dual-drum washing machine according to any one of claims 1-3, wherein in the alternate heating procedure of step S4, the first washing drum (1) and the second washing drum (2) alternately heat for certain time intervals;
after the end of heating for each time interval, whether heating of the first washing drum (1) and the second washing drum (2) ends is determined; if heating of the first washing drum (1) or the second washing drum (2) ends, the second washing drum (2) or the first washing drum (1) keeps heating until the end; and otherwise, alternate heating is continued.

5. The control method of a dual-drum washing machine according to any one of claims 1-4, wherein in the alternate heating procedure of step S4:
after the time interval of heating of the first washing drum reaches *T*₁, whether a temperature of the first washing drum is equal to a preset temperature is determined;
if a determination result is yes, heating of the first washing drum (1) ends, and the second washing drum (2) heats up to the preset temperature; and if the determination result is no, heating of the first washing drum pauses, and the second washing drum (2) heats; and
after the time interval of heating of the second washing drum reaches *T*₂, whether a temperature of the second washing drum (2) is equal to the preset temperature is determined; if the determination result is yes, heating of the second washing drum (2) ends, and the first washing drum (1) heats up to the preset temperature; and if the determination result is no, heating of the second washing drum (2) pauses, and the first washing drum (1) heats.

6. The control method of a dual-drum washing machine according to any one of claims 1-5, wherein *T*₁ and *T*₂ are minimum time intervals for each heat time of the first washing drum (1) and the second washing drum (2), respectively, and preferably, *T₁*=*T₂.*

7. The control method of a dual-drum washing machine according to any one of claims 1-6, wherein in the sequential heating procedure of step S4, the first washing drum (1) waits until the end of the heating of the second washing drum (2), and then to heat, and the second washing drum (2) executes following determination during heating:
whether a temperature of the second washing drum (2) is equal to a preset temperature; if the determination result is yes, heating of the second washing drum (2) ends; and if the determination result is no, heating of the second washing drum (2) does not end.

8. The control method of a dual-drum washing machine according to claim 7, wherein the first washing drum (1) executes following determination during heating:
whether a temperature of the first washing drum (1) is equal to the preset temperature; if the determination result is yes, heating of the first washing drum (1) ends and a heating phase ends; and if the determination result is no, heating of the first washing drum (1) does not end.

9. The control method of a dual-drum washing machine according to any one of claims 1-8, wherein if the determination result is no in step S3, executing following determination:
whether the second washing drum (2) is performing any of a dewatering or a drying procedure is determined; if the determination result is yes, the first washing drum (1) waits until the corresponding dewatering or drying procedure of the second washing drum (2) is finished, and then to heat; and if the determination result is no, the first washing drum (1) heats.

10. The control method of a dual-drum washing machine according to any one of claims 1-9, wherein the first washing drum (1) is independently provided with a first heating device for heating the first washing drum (1), and the second washing drum (2) is independently provided with a second heating device for heating the second washing drum (2); and
the first washing drum (1) and the second washing drum (2) are provided therein with a first sensor and a second sensor for monitoring a temperature of washing water, respectively.

## Patentansprüche

1. Steuerverfahren für eine Doppeltrommel-Waschmaschine des Typs mit einer ersten Waschtrommel (1), einer zweiten Waschtrommel (2) und einem Steuersystem, umfassend folgende Schritte:
Schritt S1: wenn die Doppeltrommel-Waschmaschine mit dem Betrieb begonnen hat und die erste Waschtrommel (1) vor dem Heizen an einem Heizvorgang ankommt;
Schritt S2: Bestimmen, ob eine zweite Waschtrommel (2) geheizt wird;
Schritt S3: wenn das Bestimmungsergebnis in Schritt S2 "ja" ist, Bestimmen, ob eine verbleibende Heizzeit der zweiten Waschtrommel (2) größer als *T₀* ist;
Schritt S4: wenn das Bestimmungsergebnis in Schritt S3 "ja" ist, Durchführen eines abwechselnden Heizvorgangs, bei dem die erste Waschtrommel und die zweite Waschtrommel abwechselnd geheizt werden, und wenn das Bestimmungsergebnis in Schritt S3 "nein" ist, Durchführen eines sequentiellen Heizvorgangs, bei dem die zweite Waschtrommel (2) vor der ersten Waschtrommel (1) geheizt wird,
wobei *T₀* ein Zeitwert ist, der durch das Steuersystem eingestellt wird, um zu bestimmen, ob das Heizen der zweiten Waschtrommel (2) zu Ende geht.

2. Steuerverfahren für eine Doppeltrommel-Waschmaschine nach Anspruch 1, wobei eine Gesamtheizzeit der zweiten Waschtrommel (2) *Tₘ₂* beträgt und *0* < *T₀* ≤ *1*/*3 Tm2.*

3. Steuerverfahren für eine Doppeltrommel-Waschmaschine nach Anspruch 1 oder 2, wobei 0 < *T₀* ≤ 5 min.

4. Steuerverfahren für eine Doppeltrommel-Waschmaschine nach einem der Ansprüche 1 bis 3, wobei in dem abwechselnden Heizvorgang aus Schritt S4 die erste Waschtrommel (1) und die zweite Waschtrommel (2) abwechselnd für bestimmte Zeitintervalle heizen;
wobei nach dem Ende des Heizens für jedes Zeitintervall bestimmt wird, ob das Heizen der ersten Waschtrommel (1) und der zweiten Waschtrommel (2) endet; wenn das Heizen der ersten Waschtrommel (1) oder der zweiten Waschtrommel (2) endet, die zweite Waschtrommel (2) oder die erste Waschtrommel (1) bis zum Ende weiter heizt; und andernfalls das abwechselnde Heizen fortgesetzt wird.

5. Steuerverfahren für eine Doppeltrommel-Waschmaschine nach einem der Ansprüche 1 bis 4, wobei in dem abwechselnden Heizvorgang aus Schritt S4:
nachdem das Zeitintervall für das Heizen der ersten Waschtrommel *T₁* erreicht hat, bestimmt wird, ob die Temperatur der ersten Waschtrommel gleich einer voreingestellten Temperatur ist;
wenn ein Bestimmungsergebnis "ja" ist, das Heizen der ersten Waschtrommel (1) beendet wird, und die zweite Waschtrommel (2) auf die voreingestellte Temperatur heizt; und wenn das Bestimmungsergebnis "nein" ist, das Heizen der ersten Waschtrommel unterbrochen wird, und die zweite Waschtrommel (2) heizt; und
nachdem das Zeitintervall des Heizens der zweiten Waschtrommel *T₂* erreicht hat, bestimmt wird, ob eine Temperatur der zweiten Waschtrommel (2) gleich der voreingestellten Temperatur ist; wenn das Bestimmungsergebnis "ja" ist, das Heizen der zweiten Waschtrommel (2) beendet wird, und die erste Waschtrommel (1) auf die voreingestellte Temperatur heizt; und wenn das Bestimmungsergebnis "nein" ist, das Heizen der zweiten Waschtrommel (2) unterbrochen wird, und die erste Waschtrommel (1) heizt.

6. Steuerverfahren für eine Doppeltrommel-Waschmaschine nach einem der Ansprüche 1 bis 5, wobei *T₁* und *T₂* Mindestzeitintervalle für jede Heizzeit der ersten Waschtrommel (1) bzw. der zweiten Waschtrommel (2) sind und vorzugsweise *T₁ = T₂.*

7. Steuerverfahren für eine Doppeltrommel-Waschmaschine nach einem der Ansprüche 1 bis 6, wobei in dem sequentiellen Heizvorgang aus Schritt S4 die erste Waschtrommel (1) bis zum Ende des Heizens der zweiten Waschtrommel (2) wartet, um dann zu heizen, und die zweite Waschtrommel (2) während des Heizens die folgende Bestimmung durchführt:
ob eine Temperatur der zweiten Waschtrommel (2) gleich einer voreingestellten Temperatur ist; wenn das Bestimmungsergebnis "ja" ist, das Heizen der zweiten Waschtrommel (2) beendet wird; und wenn das Bestimmungsergebnis "nein" ist, das Heizen der zweiten Waschtrommel (2) nicht beendet wird.

8. Steuerverfahren für eine Doppeltrommel-Waschmaschine nach Anspruch 7, wobei die erste Waschtrommel (1) während des Heizens folgende Bestimmung durchführt:
ob eine Temperatur der ersten Waschtrommel (1) gleich der voreingestellten Temperatur ist; wobei, wenn das Bestimmungsergebnis "ja" ist, das Heizen der ersten Waschtrommel (1) endet und eine Heizphase endet; und wenn das Bestimmungsergebnis "nein" ist, das Heizen der ersten Waschtrommel (1) nicht endet.

9. Steuerverfahren für eine Doppeltrommel-Waschmaschine nach einem der Ansprüche 1 bis 8, wobei, wenn das Bestimmungsergebnis in Schritt S3 "nein" ist, folgende Bestimmung ausgeführt wird:
es wird bestimmt, ob die zweite Waschtrommel (2) einen Entwässerungs- oder Trocknungsvorgang durchführt; wobei, wenn das Bestimmungsergebnis "ja" ist, die erste Waschtrommel (1) wartet, bis der entsprechende Entwässerungs- oder Trocknungsvorgang der zweiten Waschtrommel (2) beendet ist, und dann heizt; und wenn das Bestimmungsergebnis "nein" ist, die erste Waschtrommel (1) heizt.

10. Steuerverfahren für eine Doppeltrommel-Waschmaschine nach einem der Ansprüche 1 bis 9, wobei die erste Waschtrommel (1) unabhängig mit einer ersten Heizvorrichtung zum Heizen der ersten Waschtrommel (1) versehen ist und die zweite Waschtrommel (2) unabhängig mit einer zweiten Heizvorrichtung zum Heizen der zweiten Waschtrommel (2) versehen ist; und
die erste Waschtrommel (1) und die zweite Waschtrommel (2) mit einem ersten Sensor bzw. einem zweiten Sensor zur Überwachung einer Temperatur des Waschwassers versehen sind.

## Revendications

1. Procédé de commande d'une machine à laver à double tambour du type ayant un premier tambour de lavage (1), un second tambour de lavage (2) et un système de commande, comprenant les étapes suivantes :
étape S1 : lorsque la machine à laver à double tambour a commencé à fonctionner et que le premier tambour de lavage (1) arrive à une procédure de chauffage avant le chauffage ;
étape S2 : déterminer si un second tambour de lavage (2) est chauffé ;
étape S3 : si le résultat de la détermination à l'étape S2 est oui, déterminer si un temps de chauffage restant du second tambour de lavage (2) est supérieur à *T*₀ ;
étape S4 : si le résultat de la détermination à l'étape S3 est oui, effectuer une procédure de chauffage alternée dans laquelle le premier tambour de lavage et le second tambour de lavage sont chauffés en alternance, et si le résultat de la détermination à l'étape S3 est non, effectuer une procédure de chauffage séquentielle dans laquelle le second tambour de lavage (2) est chauffé avant que le premier tambour de lavage (1) ne soit chauffé,
*T*₀ étant une valeur de temps, établie par l'intermédiaire dudit système de commande, pour déterminer si le chauffage du second tambour de lavage (2) arrive à sa fin.

2. Procédé de commande d'une machine à laver à double tambour selon la revendication 1, dans lequel un temps de chauffage total du second tambour de lavage (2) est *T*_{*m*2}, et 0 < *T*₀ ≤ 1 /3 *Tₘ₂.*

3. Procédé de commande d'une machine à laver à double tambour selon la revendication 1 ou 2, dans lequel 0 < *T*₀ ≤ 5 min.

4. Procédé de commande d'une machine à laver à double tambour selon l'une quelconque des revendications 1 à 3, dans lequel dans la procédure de chauffage alternée de l'étape S4, le premier tambour de lavage (1) et le second tambour de lavage (2) chauffent alternativement pendant un certain temps intervalles ;
après la fin du chauffage pour chaque intervalle de temps, il est déterminé si le chauffage du premier tambour de lavage (1) et du second tambour de lavage (2) se termine ; si le chauffage du premier tambour de lavage (1) ou du second tambour de lavage (2) se termine, le second tambour de lavage (2) ou le premier tambour de lavage (1) continue de chauffer jusqu'à la fin ; et sinon, le chauffage alterné est poursuivi.

5. Procédé de commande d'une machine à laver à double tambour selon l'une quelconque des revendications 1 à 4, dans lequel, dans la procédure de chauffage alternative de l'étape S4 :
après que l'intervalle de temps de chauffage du premier tambour de lavage a atteint *T*₁, il est déterminé si une température du premier tambour de lavage est égale à une température prédéfinie ;
si un résultat de détermination est oui, le chauffage du premier tambour de lavage (1) se termine, et le second tambour de lavage (2) chauffe jusqu'à la température prédéfinie ; et si le résultat de la détermination est non, le chauffage du premier tambour de lavage s'arrête, et le second tambour de lavage (2) chauffe ; et
après que l'intervalle de temps de chauffage du second tambour de lavage atteint *T*₂, il est déterminé si une température du second tambour de lavage (2) est égale à la température prédéfinie ; si le résultat de la détermination est oui, le chauffage du second tambour de lavage (2) se termine, et le premier tambour de lavage (1) chauffe jusqu'à la température prédéfinie ; et si le résultat de la détermination est non, le chauffage du second tambour de lavage (2) s'arrête, et le premier tambour de lavage (1) chauffe.

6. Procédé de commande d'une machine à laver à double tambour selon l'une quelconque des revendications 1 à 5, dans lequel *T*₁ et *T*₂ sont des intervalles de temps minimaux pour chaque temps de chauffe du premier tambour de lavage (1) et du second tambour de lavage (2), respectivement, et de préférence, *T*₁ *= T*₂*.*

7. Procédé de commande d'une machine à laver à double tambour selon l'une quelconque des revendications 1 à 6, dans lequel dans la procédure de chauffage séquentiel de l'étape S4, le premier tambour de lavage (1) attend jusqu'à la fin du chauffage du second tambour de lavage (2), puis à chauffer, et le second tambour de lavage (2) exécute la détermination suivante pendant le chauffage :
si une température du second tambour de lavage (2) est égale à une température prédéfinie ; si le résultat de la détermination est oui, le chauffage du second tambour de lavage (2) se termine ; et si le résultat de la détermination est non, le chauffage du second tambour de lavage (2) ne s'arrête pas.

8. Procédé de commande d'une machine à laver à double tambour selon la revendication 7, dans lequel le premier tambour de lavage (1) exécute la détermination suivante pendant le chauffage :
si une température du premier tambour de lavage (1) est égale à la température prédéfinie ; si le résultat de la détermination est oui, le chauffage du premier tambour de lavage (1) se termine et une phase de chauffage se termine ; et si le résultat de la détermination est non, le chauffage du premier tambour de lavage (1) ne s'arrête pas.

9. Procédé de commande d'une machine à laver à double tambour selon l'une quelconque des revendications 1 à 8, dans lequel, si le résultat de la détermination est non à l'étape S3, exécuter la détermination suivante :
il est déterminé si le second tambour de lavage (2) effectue l'une quelconque d'une procédure d'égouttage ou de séchage ; si le résultat de la détermination est oui, le premier tambour de lavage (1) attend que la procédure de déshydratation ou de séchage correspondante du second tambour de lavage (2) soit terminée, puis chauffe ; et si le résultat de la détermination est non, le premier tambour de lavage (1) chauffe.

10. Procédé de commande d'une machine à laver à double tambour selon l'une quelconque des revendications 1 à 9, dans lequel le premier tambour de lavage (1) est pourvu indépendamment d'un premier dispositif de chauffage pour chauffer le premier tambour de lavage (1), et le second tambour de lavage le tambour (2) est pourvu indépendamment d'un second dispositif de chauffage pour chauffer le second tambour de lavage (2) ; et
le premier tambour de lavage (1) et le second tambour de lavage (2) sont pourvus à l'intérieur d'un premier capteur et d'un second capteur pour surveiller une température d'eau de lavage, respectivement.
